# EUROPEAN PATENT SPECIFICATION

(11) **EP 3 595 344 B1**
(45) Date of publication and mention of the grant of the patent: **13.12.2023**
(21) Application number: 19184647.6
(22) Date of filing: 05.07.2019
(51) Int. Cl.: G06F 21/60, G06F 21/74, H04W 8/24

(54) **REMOTE MANAGEMENT OF WIRELESS USER DEVICES**
FERNVERWALTUNG VON DRAHTLOSEN BENUTZERVORRICHTUNGEN
GESTION À DISTANCE DE DISPOSITIFS D'UTILISATEUR SANS FIL

(30) Priority: 10.07.2018 FI 20180078
(43) Date of publication of application: 15.01.2020
(73) Proprietor: Airbus Defence and Space Oy, 00380 Helsinki (FI)
(72) Inventor: Haukimäki, Kimmo, 00380 Helsinki (FI); Lefay, Christian, 00380 Helsinki (FI); Laitinen, Mika K, 00380 Helsinki (FI); Paajanen, Heikki, 00380 Helsinki (FI); Leinonen, Toni, 00380 Helsinki (FI)
(74) Representative: Kolster Oy Ab

(56) References cited:
- EP-A1- 2 850 554
- EP-A1- 2 852 200
- "Terrestrial Trunked Radio (TETRA); Voice plus Data (V+D); Part 7: Security", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. TCCE 6, no. V3.4.1 6 January 2017 (2017-01-06), pages 1-216, XP014287388, Retrieved from the Internet: URL:http://www.etsi.org/deliver/etsi_en/30 0300_300399/30039207/03.04.01_60/en_300392 07v030401p.pdf [retrieved on 2017-01-06]
- "TETRA and Critical Communications Evolution (TCCE); Critical Communications Architecture; Part 2: Critical Communications application mobile to network interface architecture", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. TCCE 4, no. V1.2.1 8 June 2017 (2017-06-08), pages 1-107, XP014291124, Retrieved from the Internet: URL:http://www.etsi.org/deliver/etsi_ts/10 3200_103299/10326902/01.02.01_60/ts_103269 02v010201p.pdf [retrieved on 2017-06-08]

## Description

### FIELD

The invention relates to remote management of wireless user devices, and especially disabling at least temporarily certain features of a user device.

### BACKGROUND

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Current trends include migration of traditional systems to advanced systems like smart phones having, for example, PMR applications for PMR services, and to so called hybrid devices which can operate both in PMR networks and in one or more other kind of networks, like public cellular networks. These different networks provide different remote management features. ETSI EN 300 392-7 V3.4.1 (2016-10) "Terrestrial Trunked Radio (TETRA); Voice plus Data (V+D); Part 7: Security" discloses examples of remote management features relating how to secure data from unauthorized persons and misuse. Patent application EP 2 850 554 discloses a solution in which a subset of features in a smart phone can be disabled while some features remain enabled when a security mode of the smart phone is activated so that the user can take the smart phone with him/her when visiting a secure zone. Especially in case of a lost or stolen hybrid user device comprising PMR data, the remote management features should provide the same level of reliability to secure especially the PMR data from unauthorized persons and misuse. However, that is not currently the situation.

### SUMMARY

An object of the present invention is to provide a remote management solution securing data from unauthorized use. The objects of the invention are achieved by methods, a user device and a computer program product as defined in the independent claims. The preferred embodiments of the invention are disclosed in the dependent claims.

A general aspect of the inventions applies the security features of one network type, received over an air interface of the network type, to one or more wireless air interfaces of one or more other types.

### BRIEF DESCRIPTION OF THE DRAWINGS

In the following, embodiments will be described in greater detail with reference to accompanying drawings, in which
Figure 1 shows a simplified architecture of an example of a system having schematic block diagrams of user devices;
Figures 2 to 5 are flow charts illustrating exemplified functionalities;
Figures 6 to 9 illustrates exemplified information exchange; and
Figure 10 is a schematic block diagram of a user device.

### DETAILED DESCRIPTION OF SOME EMBODIMENTS

The following embodiments illustrate different examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any hybrid user device configured to provide services at least over a secured wireless network and over a wireless network of another type. One of system providing secured wireless is known as Terrestrial Trunked Radio Access (TETRA) system. In the following different examples are described using TETRA network structure as the secured wireless network without restricting the examples and embodiments thereto. Other possible secured network solutions include TETRAPOL and DMR (digital mobile radio) systems. Examples of what the wireless network of another type may be include a 3^{rd}, 4^{th}, or 5^{th} or beyond, generation mobile network, like LTE (Long Term Evolution), possible implementing 3GPP MCPTT (3^{rd} Generation Partnership Project Mission Critical Push to Talk) based group voice services, for example, WiMAX (Worldwide Interoperability for Microwave Access), and WLAN (Wireless Local Area Network), like WiFi -based networks. It should be appreciated that the above lists are not exhaustive lists.

The specifications of different systems, especially when wireless communication is utilized, develop rapidly. Such development may require extra changes to an embodiment. A current trend is to abstract the actual physical structure and to provide communication functionality in networks as software, as an on-demand service. For abstraction the future networks may utilize software defined networking (SDN) and/or network functions virtualization (NVF) architecture. The network functions virtualization architecture includes virtualized network functions (VNF). A virtualized network function is defined as a network function that runs in one or more virtual machines on top of a networking infrastructure that may include routers, switches, storage, servers, cloud computing systems, etc. These new network architectures may change the way networks are being constructed and managed. Therefore, all words and expressions should be interpreted broadly and they are intended to illustrate, not to restrict, the embodiment.

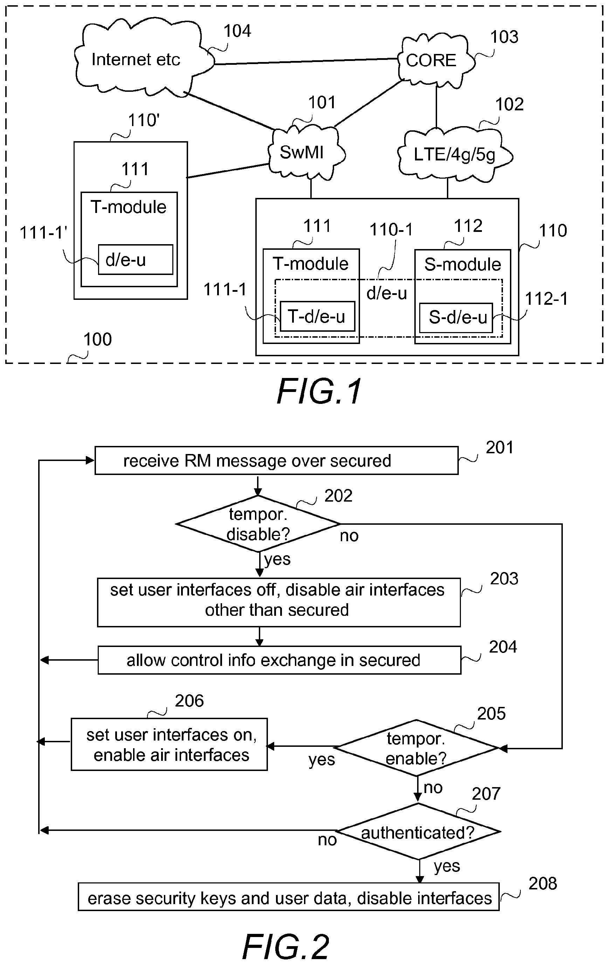

A general architecture of a communication system 100 according to an embodiment based on TETRA as a secured network 101 and LTE or 4G or 5G (i.e. a public cellular network) as a wireless network of another type, or at least as a radio access network 102 of another type, is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other functions and structures used in or for communication both networks. They, as well as the protocols, are well known by persons skilled in the art and are irrelevant to the actual invention. Therefore, they need not to be discussed in more detail here.

In the example illustrated in Figure 1, the system 100 comprises a plurality of user devices, two of being depicted. The depicted two user devices 110, 110' are connectable over an air link to a switching and management infrastructure (SwMI) 101, one of the depicted user devices 110 being connectable over another air link to the radio access network 102 of the other type. The radio access network 102 is typically connected via a core network 103 to other networks 104, like In-ternet. SwMI 101 may be connected to the other networks 104 either directly or via the core network 103. However, it should be appreciated that it bears no significance to the invention how different types of networks connect to each other.

SwMI 101 is equipment for a voice plus data (V+D) network, which enables user devices comprising TETRA radios to communicate with each other using TETRA protocol. In other words, SwMI includes all equipment and means, which enable users to communicate with each other via the TETRA network. The exact physical configuration of the SwMI is not, as such, relevant to the invention. Basically, the SwMI represents here any secured network infrastructure.

The user devices 110, 110' represent herein any apparatus/equipment/terminal that is a computing device providing secure voice and/or data communications for users at least according to a secure network specification, such as TETRA specification, and according another wireless specification. Such a user device 110, 110' may be a mobile radio apparatus, such as a handheld radio apparatus, or a so called fixed radio apparatus in a vehicle, for example. Examples of handheld radio apparatuses include a handheld radio terminal, a smart-phone, a personal digital assistant (PDA), a handset, a laptop, a touch screen computer, a tablet, a notebook, a multimedia device, a wearable device, a drone, an augmented reality and/or virtual reality helmet, without limiting the user device to the above listed examples.

The user device 110 illustrates a hybrid user device comprising a separate module 111 (T-module) for the TETRA network (an example of a module for implementing a secure network user device functionality) and a separate module 112 for the other wireless network (a module for implementing a functionality for another type of a cellular network). In the illustrated example, the other module is a smartphone module (S-module). The smartphone module may use any smartphone operating system, like Android based operating system. Both of the modules may further support short range access via one or more different air interfaces, such as Bluetooth interface, Wireless local area network, such as Wi-Fi, interface, etc. The hybrid user device 110 is configured to provide the same level of reliability to secure at least user related data, or at least user related data that is to be kept secret, regardless of the network the data relates to. The hybrid user device comprises for that purpose a disable/enable unit (d/e-u) 110-1 implemented by two sub-units. One of the sub-units is a TETRA disable/enable unit (T-d/e-u) 111-1, and the other one is a smartphone disable/enable unit (S-d/e-u) 112-1.

The other depicted user device 110' is not a hybrid user device, but a user device 110' configured to operate in the TETRA network and provide short range access via one or more different air interfaces, such as Bluetooth interface, Wireless local area network, such as Wi-Fi, interface, etc. To provide enhanced secure to user related data relating to TETRA network, the user device comprises a disable/enable unit (d/e-u) 110'-1 as a single unit.

Figure 2 illustrates an example of a functionality of the disable/enable unit. For the sake of clarity, in the illustrated example, it is assumed that a remote management message is one of messages relating to disable/enable mechanisms. It should be appreciated that no functionality relating to possible encrypting and corresponding decrypting is illustrated.

Referring to Figure 2, when it is detected in step 201 that a remote management (RM) message is received over the secured air interface, i.e. air interface of the secure network, it is checked in step 202, whether the message is a temporary disable message. If it is (step 202: yes), all user interfaces are set off in step 203 and all other air interfaces than the secured air interface are disabled in step 203. This means, for example, that the display of the user device will be blank, since it is switched off, keyboard lights are switched off, the user device does not react to a user pressing a key, the only exception being the power key, Further, Bluetooth, Wi-FI, USB (Universal Serial Bus), etc are disabled. By setting off the user interfaces, like screen, buttons, USB, etc. the user of the user device cannot use the user device, but more importantly, cannot retrieve any user data from the user device. Hence secret information is not lost. To keep the user device registered in the secure network for possible cancelling of the temporary disablement, control information exchange is allowed in step 204 over the secured air interface with the secure network. The user of the user device cannot disconnect the connection to the secure network without shutting down the user device. Then, when next remote management message is received, the process continues from step 201.

If the message is not a temporary disable message (step 202: no), it is checked in step 205, whether the message is an enable message. If it is (step 205: yes), the temporary disablement is cancelled in step 206 by setting the user interfaces on and enabling all air interfaces. After that the user can use the user device. Then, when next remote management message is received, the process continues from step 201.

If the message is not a temporary disable message (step 202: no) or an enable message (step 205: no), it is a permanent disable message. The permanent disable can be accepted (executed) only if it has been ensured that the message is received from the secure network and not from an attacker node. Therefore it is checked in step 207 whether the secure network, or the network node in the secure network, wherefrom the remote management message is received, has been successfully authenticated. If not (step 207: no), the permanent disable message is ignored or rejected. Then, when next remote management message is received, the process continues from step 201.Ignoring non-authenticated permanent disable messages ensures that a possible cyber hacker cannot permanently disable the user device, since the consequences of the permanent disablement are severe and cannot be cancelled over the secure network, as is the case with the temporary disablement.

If the secure network has been successfully authenticated (step 207: yes), all security keys and user data is erased in step 208 and all user interfaces and air interfaces are disabled. In other words, the only possibility to take the user device again in use, is to send the user device to the manufacturer; the user input or remote management messages cannot cancel the permanent disablement.

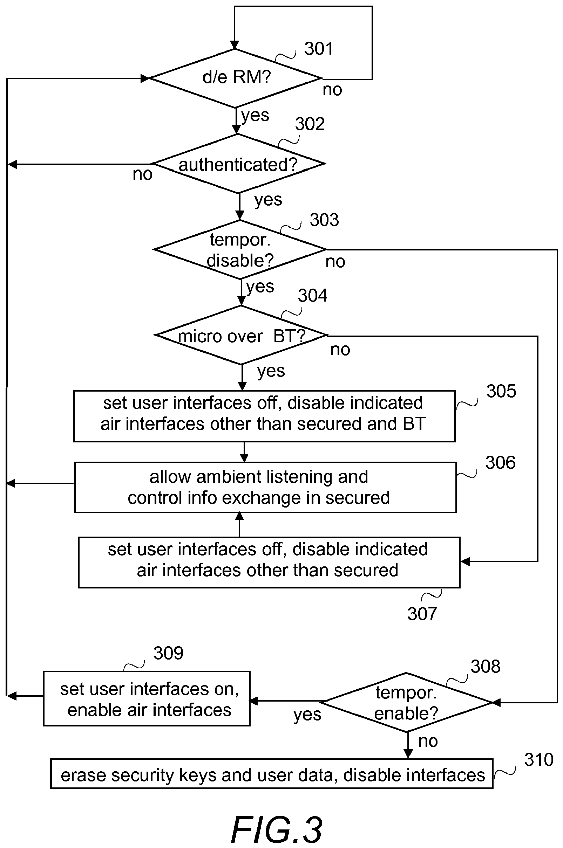

Figure 3 illustrates another example of a functionality of the disable/enable unit. In the example it is assumed that a microphone needed for ambient listening may be connected via a Bluetooth (BT) connection to the user device. It is a straightforward solution to implement a corresponding functionality to any other functionality, like location tracking, and air interface(s) possibly needed for the functionality. A further assumption made is that air interfaces may be temporarily disabled selectively. In other words, the remote management message for temporary disablement indicates, whether all, one or some of possible air interfaces are to be disabled. Naturally, similar approach may be implemented to user interfaces, although not illustrated in the example of Figure 3. Further, in the illustrated example, no remote disablement/enablement is allowed without authenticating the originator of the remote management message. It should be appreciated that no functionality relating to possible encrypting and corresponding decrypting is illustrated in Figure 3.

Referring to Figure 3, it is monitored in step 301, whether a remote management (RM) message relating to disabling or enabling is received over the secured air interface, i.e. air interface of the secure network. When such a message is received (step 301: yes), it is checked in step 302 whether the secure network, or the network node in the secure network, wherefrom the remote management message is received, has been successfully authenticated. By this checking it is ensured, as explained above with Figure 2, that the remote management message is received from the secure network and not from an attacker node.

If the secure network is not authenticated (step 302: no), the remote management message is ignored and the process continues monitoring in step 301.

If the secure network has been successfully authenticated (step 302: yes), it is checked in step 303, whether the message is a temporary disable message. If it is (step 303: yes), it is checked in step 304 whether the microphone is connected over a Bluetooth connection to the user device. If it is (step 304: yes), user interfaces are set off in step 305 and all other indicated air interfaces than the secured air interface and the Bluetooth are disabled in step 305. By setting off the user interfaces, like screen, buttons, USB, etc. the user of the user device cannot retrieve any data. Hence, the data is secured against intruders that are skilled enough to use the other interfaces for data retrievals. To keep the user device registered in the secure network for possible cancelling of the temporary disablement, control information exchange and ambient listening is allowed in step 306 over the secured air interface with the secure network, and allowing the Bluetooth connection to the microphone. Then the process continues the monitoring in step 301.

If the microphone is not connected over a Bluetooth connection to the user device (step 304: no), user interfaces are set off in step 307 and all other indicated air interfaces than the secured air interface are disabled in step 307. In other words, it is possible to disable also the Bluetooth interface. Then the process continues in step 306 control information exchange and ambient listening.

If the remote management message is not a temporary disable message (step 303: no), it is checked in step 308, whether the remote management message is an enable message. If it is (step 308: yes), the temporary disablement is cancelled in step 309 by setting the user interfaces on and enabling all air interfaces. After that the user can again use the user device. Then the process continues the monitoring in step 301.

If the message is not a temporary disable message (step 303: no) or an enable message (step 308: no), it is a permanent disable message. Therefore all security keys and user data is erased in step 310 and all user interfaces and air interfaces are disabled. In other words, the only possibility to take the user device again in use, is to send the user device to the manufacturer; the user input or remote management messages cannot cancel the permanent disable.

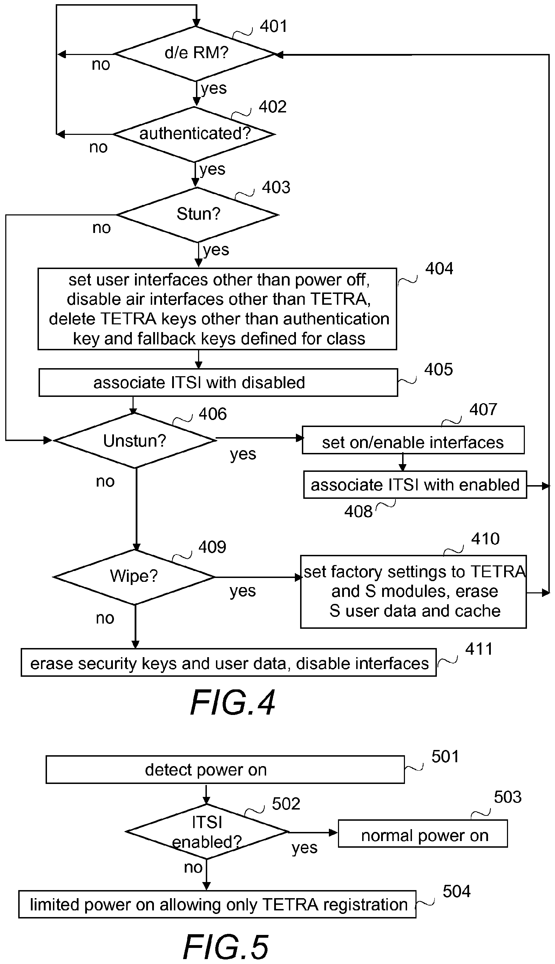

Figure 4 illustrates another example of a functionality of the disable/enable unit. In the example it is assumed that the secure network is a TETRA network and the user device is configured to access the other network using Android based operating system. Therefore TETRA term "Stun" is used as a synonym to the temporary disablement, TETRA term "Unstun" as a synonym to an enablement, TETRA term "Kill" as a synonym to a permanent disablement, and Android term "Wipe" as a synonym for remotely resetting to factory settings. It should be appreciated that no functionality relating to TETRA end-to-end encrypting and corresponding decrypting is illustrated. Further, for the sake of clarity, it is assumed that TETRA authentications relating to TETRA enable/disable mechanism are performed successfully.

Referring to Figure 4, it is monitored in step 401, whether a remote management (RM) message relating to disabling or enabling is received. When such a message is received (step 401: yes), the process continues depending on the message. If a "Stun" is received as a remote management message (step 403: yes), the user device is disabled in step 404. The disablement comprises setting other user interfaces than a power button off, disabling all other air interfaces than TETRA air interface, deleting TETRA keys except an authentication key, and if the security class is 2 or 3, fallback keys defined for the class. After that TETRA subscription identifier ITSI is associated in step 405 with status information "disabled". Then the process returns to step 401 to monitor, whether a remote management (RM) message relating to disabling or enabling is received.

If an "Unstun" is received (step 403: no, step 406: yes), all user interfaces that have been set off in step 404 and all air interfaces that have been disabled in step 404 are set on or enabled in step 407. After that ITSI is associated in step 408 with status information enabled. Then the process returns to step 401 to monitor, whether a remote management (RM) message relating to disabling or enabling is received.

If a "Wipe" is received (step 403: no, step 406: no, step 409: yes), factory settings are set in step 410 in both modules, i.e. in the TETRA module and in the smartphone (S) module, and user data and cache are erased (deleted, wiped) in the smartphone module. However, since the "Wipe" is not received over the secure network, by not erasing user data in the TETRA module, it is ensured that an attacker cannot cause that secure data in the TETRA module is erased. It should be noted that "Wipe" can be received after "Stun" only if "Stun" has been cancelled by "Unstun", enabling reception of "Wipe", is received. Then the process returns to step 401 to monitor, whether a remote management (RM) message relating to disabling or enabling is received. Then the process returns to step 401 to monitor, whether a remote management (RM) message relating to disabling or enabling is received.

If the message is not "Stun", "Unstun" or "Wipe", it is TETRA "Kill", and security keys, including any application logging information possible stored, in both modules are erased in step 411, as well as user data at least in the T-module is erased. Depending on an implementation, user data in the S-module may be erased, or TETRA-related applications and corresponding user data in the S-module may be erased, or no user data in the S-module is erased. Further, user interfaces and air interfaces are disabled in step 411. In other words, the only possibility to take the user device again in use, is to send the user device to the manufacturer; the user input or remote management messages cannot cancel the kill.

In another embodiment, the Wipe does not cause anything in the TETRA-module, i.e. the Wipe is a local command affecting only to the S-module.

Figure 5 is a flow chart illustrating the functionality of the disable/enable unit, or a corresponding sub-unit, when a power has been shut down, and ITSI, or any suitable parameter, is associated with enable/disable status information.

When it is detected in step 501 that the power is turned on, it is checked in step 502, is ITSI associated with the enabled status. If it is (502: yes), normal power on, allowing in a hybrid user device powering on both modules, is performed in step 503. If the status is not enabled (502: no), a limited power on is performed in step 504, the limited power on performing only registration to the secure network. The registrations may include group registration. However, to the user the user device looks like a dead user device, and in a hybrid user device, powering on the other module is not performed. This means that if ITSI is in a removable subscriber module, moving the module into another terminal to use its interfaces to retrieve secret user data fails, since the other interfaces remain unusable.

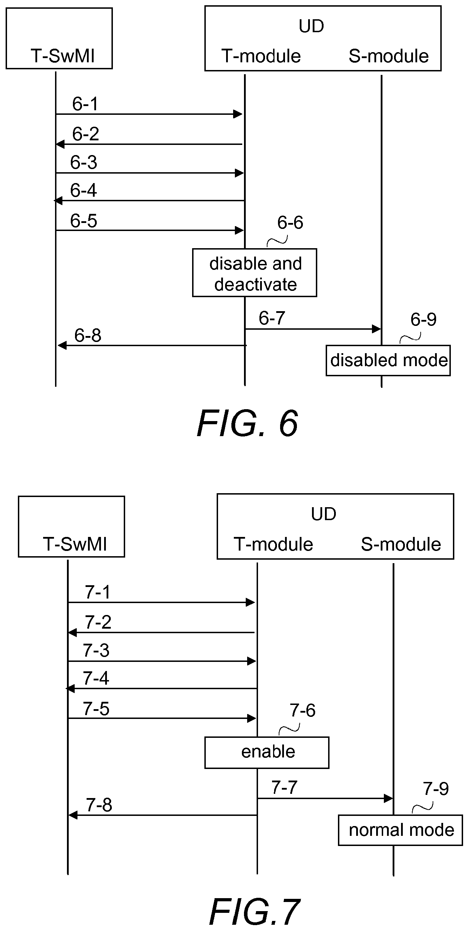

Figures 6 to 9 illustrate exemplified information exchange in a user device UD that is configured to implement the disable/enable unit as two separate subunits, and between the user device and an entity, such as a service management entity, providing remote management messages. In the illustrated examples, the subunits are the TETRA disable/enable unit in the TETRA module (T-module) and the smartphone disable/enable unit in the smartphone module (S-module), configured to use Android based operating system, without limiting the examples to such a solutions. Further, all information exchange and related functionality are not illustrated. For example, end-to-end encryption, and correspondingly decryption, are not illustrated. In the examples of Figures 6 to 8, an enable and disable mechanism defined for TETRA is utilised in messages between the TETRA SwMI (T-SwMI) and the TETRA module (T-module) in the user device UD. The enable and disable mechanism is described in detail in in paragraph 5 in the European Standard ETSI EN 300 392-7 V3.2.0, Terrestrial Trunked Radio (TETRA); Voice plus Data (V+D); Part 7: Security.

Referring to Figure 6, the information exchange relates to temporarily disabling a user device with mutual authentication. For that purpose the T-SwMI generates and sends a remote management message 6-1. The message may be D_DISABLE(Intent, RAND1, RS), which comprise a random challenge RAND1 and a random seed RS. The user device UD, or more precisely its T-module computes a challenge response RES1 and responses by sending message 6-2. The message 6-2 may be U AUTHENTICATION_RESPONSE(RAND2, RES1), which comprises the challenge response and another random challenge RAND2, generated by the T-module for the network side authentication. The T-SwMI compares the result received to a result it has computed, and if they are the same, as is the case in the illustrated example, and computes a challenge response RES2 using the received random challenge RAND2. Then the T-SwMI responds by sending message 6-3. The message may be D AUTHENTICATION_RESULT(R1, RES2) comprising the computed challenge response and R1 with value true or false, the true value indicating that RES1 value was the same as the one computed by the T-SwMI.

The T-module compares the result received to a result it has computed, and sends the comparison result in message 6-4 to the T-SwMI. The message may be U AUTHENTICATION_RESULT(R2) comprising R2 with value true or false, the true value indicating that RES2 value was the same as the one computed by the T-module.

Since in the illustrated example the authentication succeeds, T-SwMI confirms the temporary disablement by sending message 6-5. The message may be D_DISABLE(Confirm).

In response to the message 6-5, the T-module disables and deactivates in point 6-6 the wireless interfaces and user interfaces in the T-module, or under the control of the T-module, for example as described above with Figure 4 in step 404 with the Stun. The T-module also sends to the S-module message 6-7 to change the operation mode of the S-module to disabled, or temporarily disabled mode. The message 6-7, sent internally in the user device, may be "Temp disable" command or "command set operation mode disabled". Further, the T-module confirms to the T-SwMI that the temporary disablement has been performed by sending message 6-8. The message may be U_DISABLE_STATUS.

The S-module changes in point 6-9, in response to message 6-7, its mode to be disabled (temporarily disabled) meaning that no network connection can be established and no user input received.

Referring to Figure 7, the information exchange relates to enabling a temporarily disabled user device with mutual authentication. For that purpose the T-SwMI generates and sends a remote management message 7-1. The message may be D_ENABLE(Intent, RAND 1, RS), which comprise a random challenge RAND1 and a random seed RS. Then the process and information exchange in messages 7-2 to 7-4 corresponds to what has been described with messages 6-2 to 6-4 above, and is not repeated in vain here. Since in the illustrated example the authentication succeeds, T-SwMI confirms the enablement by sending message 7-5. The message may be D_ENABLE(Confirm).

In response to the message 7-5, the T-module enables in point 7-6 the wireless interfaces and user interfaces in the T-module, or under the control of the T-module, for example as described above with Figure 4 in step 407 with the Unstun. The T-module also sends to the S-module message 7-7 to change the operation mode of the S-module to enabled mode. The message 7-7, sent internally in the user device, may be "Temp enable command" or "command set operation mode normal". Further, the T-module confirms to the T-SwMI that the enablement has been performed by sending message 7-8. The message may be U_DISABLE_STATUS.

The S-module changes in point 7-9, in response to message 7-7, its mode to be normal.

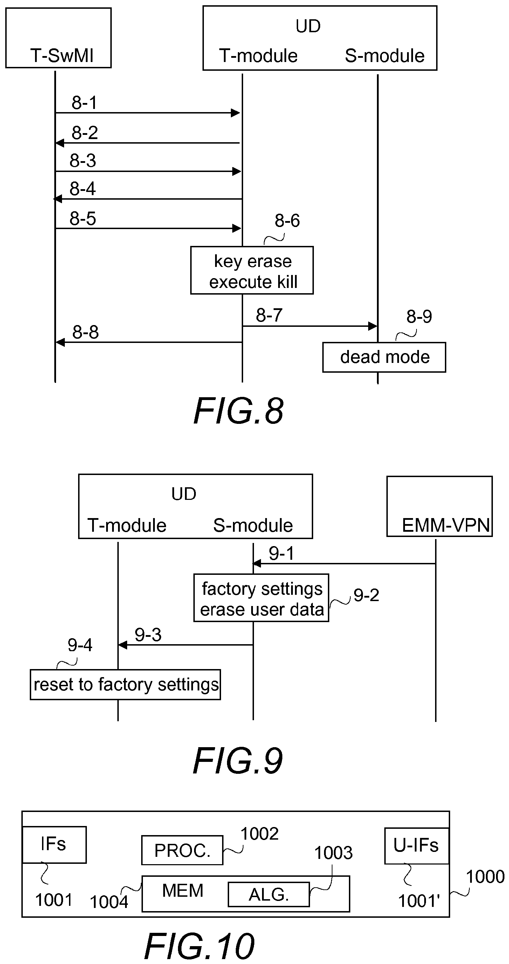

Referring to Figure 8, the information exchange relates to permanently disabling a user device with mutual authentication. The information exchange depicted in messages 8-1 to 8-5 correspond to what has been described with messages 6-1 to 6-5 above, with the exception that the intent is for permanent disabling, and therefore information exchange in messages 8-1 to 8-5 is not repeated here.

In response to the message 8-5, the T-module erases in point 8-6 the keys and executes in point 8-6 the kill, i.e. permanent disablement, resulting to the user device being dead, as described above. The T-module also sends to the S-module message 8-7 to change the operation mode of the S-module to dead mode. The message 8-7, sent internally in the user device, may be "Permanent disable command" or "command set operation mode dead". Further, the T-module confirms to the T-SwMI that the permanent disablement has been performed by sending message 8-8. The message may be U_DISABLE_STATUS.

The S-module changes in point 8-9, in response to message 8-7, its mode to be dead. This means, as described above, that user data and/or some applications are erased so that the S-module cannot be taken into use by remote management over the network or not by the user.

Since according to the TETRA standards, the temporary disabling, enabling and permanent disabling may be performed to a subscription or to the equipment, meaning in the hybrid solution the T-module, or to both, the T-module may be configured to send messages 6-8, 7-8 and 8-8 regardless the entity which is disabled/enabled or only if the equipment or both the subscription and equipment are disabled/enabled, or have different rules for the temporary disablement/enablement and for the permanent disablement.

Further, since the temporary disablement may be cancelled remotely, as well as if an attacker has succeeded to enable the user device, the enablement may be remotely overridden, the mutual authentication may be replaced by unmutual authentication, or even to no authentication procedure in Figures 7 and 8.

The information exchange illustrated in Figure 9 discloses a solution based on Wipe operation supported by LTE/4G/5G. Since it is possible that a user of a smart phones disable data connection (meaning that only circuit switched communication is enabled), in the below example it is assumed that the data connection is enabled - otherwise the remote management message cannot be received. Such a problem does not exist in the TETRA network; the user cannot by user settings block remote management messages, the only way to disconnect is to shut down the whole user device.

Referring to Figure 9, an enterprise mobility management (EMM) entity with a virtual private network (VPN) connection to the user device (UD), or more precisely to its S-module, sends over the connection message 9-1 to the S-module to wipe the S-module.

In response to the message, the S-module resets in point 9-2 to factory settings, and erases in point 9-2 (wipes) user data and cache in the S-module. Further, the S-module sends to the T-module a wipe command, or "reset to factory settings" command in message 9-3. In response to the message 9-3, the T-module resets in point 9-4 its settings to factory settings.

A hybrid user device may be configured to implement examples based on Figure 6 and/or on Figure 7, and/or in Figure 8, and/or in Figure 9.

As is evident from the above examples, by utilising the possibilities provided by a secure network, especially the TETRA network, a user device may be temporarily disabled without loss of user data, the disablement taking place efficiently and without a possibility of a user to block remote management messages causing the disablement.

A further advantage is that at the same time as a functionality of the user device to provide services to a user over the secure network is blocked, all other over the air communications, and corresponding services are also blocked, as well as interfaces allowing direct connections of a user to the user device are blocked. This increases security of the user data stored to the user device. Still another advantage is that the blocking of the smart phone functionality may be performed smart phone type -independently, and there is no need to have also an EMM system (unless wanted for Wipe and a remote locking of the user device).

The steps, points, related functions and information exchanges described above in Figures 2 to 9 are in no absolute chronological order, and some of them may be performed simultaneously or in an order differing from the given one. Other functions can also be executed between them or within them, and other information may be sent. For example, processes in Figure 2 and/or Figure 4 may be configured to be performed in a step-wise way (per indicated air interface), as the process in Figure 3. Some of the steps or points or part of the steps or points or one or more pieces of information can also be left out or replaced by a corresponding step, point or part of the step, point or one or more pieces of information. For example, the process in Figure 3 may be implemented without the step-wise way and/or without performing the checking for ambient listening.

The techniques and methods described herein may be implemented by various means so that a user device (apparatus/computing device) configured to provide or support disablement/enablement on at least partly on what is disclosed above with any of Figures 1 to 9, including implementing one or more functions/operations described above with an embodiment/example, for example by means of any of Figures 2 to 9, comprises not only prior art means, but also means for implementing the one or more functions/operations of a corresponding functionality described with an embodiment, for example by means of any of Figures 2 to 9, and it may comprise separate means for each separate function/operation, or means may be configured to perform two or more functions/operations. For example, one or more of the means and/or the disable/enable unit, or its sub-units described above may be implemented in hardware (one or more devices), firmware (one or more devices), software (one or more modules, including the module for implementing a secure network user device functionality, and the other module for implementing a functionality for another type of a cellular network), or combinations thereof. For a hardware implementation, the embodiments/examples may be implemented within one or more application-specific integrated circuits (ASICs), digital signal processors (DSPs), digital signal processing devices (DSPDs), programmable logic devices (PLDs), field programmable gate arrays (FPGAs), radiofrequency circuits (RFICs), graphic processing units (GPUs), processors, controllers, micro-controllers, microprocessors, logic gates, other electronic units designed to perform the functions described herein by means of Figures 2 to 9, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, the memory unit can be communicatively coupled to the processor via various means, as is known in the art. Additionally, the components of the user device (apparatus/computing devices) described herein may be rearranged and/or complemented by additional components in order to facilitate the achievements of the various aspects, etc., described with regard thereto, and they are not limited to the precise configurations set forth in the given figures, as will be appreciated by one skilled in the art.

Figure 10 provides a user device (apparatus) according to some embodiments of the invention. Figure 10 illustrates a user device configured to carry out the functions described above in connection with one or more of the modules/user devices. Each apparatus 1000 may comprise one or more processing circuitry, such as at least one processor 1002, and at least one memory 1003, including one or more algorithms 1004, such as a computer program code (software) wherein the at least one memory and the computer program code (software) are configured, with the at least one processor, to cause the apparatus to carry out any one of the exemplified functionalities of the user device, or a module within the user device. The user device may further comprise different interfaces 1001, such as two or more air interfaces of different types, and one or more user interfaces 1001' to user interaction.

Referring to Figure 10, at least one of the processing circuitries in the apparatus 1000 is configured to provide the disable/enable unit, its sub-units, or any corresponding sub-unit, and to carry out functionalities, described above by means of any of Figures 2 to 9, by one or more circuitries.

The memory 1004 or part of it may be implemented using any suitable data storage technology, such as semiconductor based memory devices, flash memory, magnetic memory devices and systems, optical memory devices and systems, fixed memory and removable memory.

The two or more interfaces 1001 may comprise communication interfaces comprising hardware and/or software for realizing communication connectivity according to one or more communication protocols.

The one or more user interfaces 1001' may be any kind of a user interface, for example a screen, microphone and one or more loudspeakers for interaction with the user.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application.

In an embodiment, the at least one processor, the memory, and the computer program code form processing means or comprises one or more computer program code portions for carrying out one or more operations according to any one of the embodiments of Figures 2 to 9, or operations thereof.

Embodiments as described may also be carried out in the form of a computer process defined by a computer program or portions thereof. Embodiments of the methods described in connection with Figures 2 to 9 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a per-son of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method for a user device comprising a first module for implementing a secure cellular network user device functionality for a secure cellular network, a second module for implementing a functionality for another type of a cellular network and three or more air interfaces comprising a secured cellular air interface of the secure cellular network, usable by the first module, and a cellular air interface of the cellular network, usable by the second module, and one or more further air interfaces providing short range wireless access and being usable by the first module and the second module, the method comprising:
sending (6-7), by the first module, in response to receiving (202, 303, 6-1), in the user device by the first module, over a secured network connection via the secured cellular air interface, a remote management message to temporarily disable the functionality of the user device in a secure cellular network to where the secured network connection is established, to the second module a command to enter a disabled operation mode;
disabling (203, 305, 307, 6-9), by the second module, in response to the command, in the user device one or more air interfaces, that are usable by the second module, said air interfaces including the cellular air interface of the cellular network;
setting (203, 305, 307, 6-6), by the user device, in response to the message, user interfaces in the user device off; and
allowing (204, 306) control information exchange via the secured cellular air interface with the secure cellular network over the secured network connection.

2. A method as claimed in claim 1, further comprising:
enabling (206, 309, 7-6) by the first module, in response to receiving (205, 308, 7-1), in the user device by the first module, over the secured network connection, a second remote management message to enable the functionality of the user device in the secure cellular network, air interfaces usable by the first module in the user device;
sending (7-7), by the first module, in response to the second remote management message, to the second module a second command to enter a normal operation mode;
enabling (206, 309, 7-9), by the second module, in response to the second command, air interfaces usable by the second module; and
setting (206, 309, 7-6, 7-9), by the user device, in response to the second remote management message, user interfaces in the user device on.

3. A method as claimed in claim 1 or 2, further comprising:
checking (302), by the user device, whether the user device has successfully authenticated the secure cellular network; and
if not, ignoring the remote management message.

4. A method as claimed in any of preceding claims, wherein the first module (111) is a TETRA module, the second module (112) is a smart phone module, the secure cellular network (101) is a TETRA network, the cellular air interface is a public cellular network interface, and the one or more further air interfaces include at least one of a wireless local area network interface and Bluetooth interface.

5. A method as claimed in claim 4, further comprising:
checking before disabling temporarily an air interface, that is usable by the second module, whether the air interface is used for ambient listening or location tracking in the TETRA network;
if the air interface is used for ambient listening or location tracking in the TETRA network, allowing the ambient listening or location tracking to continue;
otherwise disabling the air interface.

6. A method as claimed in any preceding claim, the method comprising:
checking (402), by the user device, in response to receiving (403, 8-1), in the user device by the first module, over a secured network connection via a first type of air interface, a third remote management message to permanently disable the functionality of the user device in a secure cellular network to where the secured network connection is established, whether the user device has successfully authenticated the secure cellular network; and
if not, ignoring the third remote management message;
otherwise performing at least the following:
disabling (404, 8-6), by the first module, in response to the third message, all air interfaces usable by the first module in the user device;
sending (8-7), by the first module, in response to the third message, to the second module a third command to enter to a dead operation mode;
disabling (404, 8-9), by the second module, in response to the third command, in the user device all air interfaces usable by the second module;
setting (404, 8-6, 8-9), by the user device, in response to the third message, user interfaces in the user device off; and
erasing (411, 8-6, 8-9), by the user device, key information needed for communication.

7. A method as claimed in any of preceding claims, further comprising:
sending (9-3), in response to receiving (9-1), in the user device by the second module, a command to set the second module to factory settings and erase corresponding user data and cache, from the second module to the first module a command causing the first module to set (9-4) its settings to factory settings.

8. A user device (110) comprising a first module (111) for implementing a secure cellular network user device functionality for a secure cellular network, a second module (112) for implementing a functionality for another type of cellular network, three or more air interfaces comprising a secured cellular air interface of the secure cellular network, usable by the first module, a cellular air interface of the cellular network, usable by the second module and one or more further air interfaces providing short range wireless access and being usable by the first module and the second module and means (110-1, 111-1, 112-1) for implementing a method as claimed in any of preceding claims.

9. A computer program product comprising computer program code configured to perform a method as claimed in any one of claims 1 to 7 when executed on a user device comprising a first module for implementing a secure cellular network user device functionality for a secure cellular network, and a second module for implementing a functionality for another type of cellular network and three or more air interfaces comprising a secured cellular air interface of the secure cellular network, usable by the first module, a cellular air interface of the cellular network, usable by the second module and one or more further air interfaces providing short range wireless access and being usable by the first module and the second module.

## Patentansprüche

1. Verfahren für eine Benutzervorrichtung, die ein erstes Modul zum Implementieren einer sicheren Mobilfunknetzwerkbenutzervorrichtungsfunktionalität für ein sicheres Mobilfunknetzwerk, ein zweites Modul zum Implementieren einer Funktionalität für einen anderen Typ eines Mobilfunknetzwerks sowie drei oder mehr Luftschnittstellen umfasst, die eine gesicherte zellulare Luftschnittstelle des sicheren Mobilfunknetzwerks, die vom ersten Modul verwendbar ist, und eine zellulare Luftschnittstelle des Mobilfunknetzwerks, die vom zweiten Modul verwendbar ist, sowie eine oder mehrere weitere Luftschnittstellen umfassen, die einen drahtlosen Kurzbereichszugang bereitstellen und vom ersten Modul und vom zweiten Modul verwendbar sind, wobei das Verfahren Folgendes umfasst:
Senden (6-7) eines Befehls zum Eintreten in einen deaktivierten Betriebsmodus durch das erste Modul an das zweite Modul in Reaktion auf das Empfangen (202, 303, 6-1) einer Fernverwaltungsnachricht zum vorübergehenden Deaktivieren der Funktionalität der Benutzervorrichtung in einem sicheren Mobilfunknetzwerk, zu dem die sichere Netzwerkverbindung aufgebaut ist, in der Benutzervorrichtung durch das erste Modul über eine sichere Netzwerkverbindung via die gesicherte zellulare Luftschnittstelle;
Deaktivieren (203, 305, 307, 6-9) von einer oder mehreren Luftschnittstellen in der Benutzervorrichtung, die vom zweiten Modul verwendbar sind, durch das zweite Modul in Reaktion auf den Befehl, wobei die Luftschnittstellen die zellulare Luftschnittstelle des Mobilfunknetzwerks beinhalten;
Ausschalten (203, 305, 307, 6-6) von Benutzerschnittstellen in der Benutzervorrichtung durch die Benutzervorrichtung in Reaktion auf die Nachricht und
Zulassen (204, 306) eines Steuerinformationsaustauschs via die gesicherte zellulare Luftschnittstelle mit dem sicheren Mobilfunknetzwerk über die gesicherte Netzwerkverbindung.

2. Verfahren nach Anspruch 1, das ferner Folgendes umfasst:
Aktivieren (206, 309, 7-6) von Luftschnittstellen, die durch das erste Modul in der Benutzervorrichtung verwendbar sind, durch das erste Modul in Reaktion auf das Empfangen (205, 308, 7-1) einer zweiten Fernverwaltungsnachricht zum Aktivieren der Funktionalität der Benutzervorrichtung im sicheren Mobilfunknetzwerk in der Benutzervorrichtung durch das erste Modul über die gesicherte Netzwerkverbindung;
Senden (7-7) eines zweiten Befehls zum Eintreten in einen normalen Betriebsmodus durch das erste Modul in Reaktion auf die zweite Fernverwaltungsnachricht an das zweite Modul;
Aktivieren (206, 309, 7-9) von Luftschnittstellen, die vom zweiten Modul verwendbar sind, durch das zweite Modul in Reaktion auf den zweiten Befehl und
Einschalten (206, 309, 7-6, 7-9) von Benutzerschnittstellen in der Benutzervorrichtung durch die Benutzervorrichtung in Reaktion auf die zweite Fernverwaltungsnachricht.

3. Verfahren nach Anspruch 1 oder 2, das ferner Folgendes umfasst:
Prüfen (302) durch die Benutzervorrichtung, ob die Benutzervorrichtung das sichere Mobilfunknetzwerk erfolgreich authentifiziert hat; und
wenn nicht, Ignorieren der Fernverwaltungsnachricht.

4. Verfahren nach einem der vorhergehenden Ansprüche, wobei das erste Modul (111) ein TETRA-Modul ist, das zweite Modul (112) ein Smartphonemodul ist, das sichere Mobilfunknetzwerk (101) ein TETRA-Netzwerk ist, die zellulare Luftschnittstelle eine öffentliche zellulare Netzwerkschnittstelle ist und die eine oder die mehreren weiteren Luftschnittstellen mindestens eines von einer drahtlosen lokalen Netzwerkschnittstelle und einer Bluetoothschnittstelle ist.

5. Verfahren nach Anspruch 4, das ferner Folgendes umfasst:
vor dem vorübergehenden Deaktivieren einer Luftschnittstelle, die vom zweiten Modul verwendbar ist, Prüfen, ob die Luftschnittstelle für ein Umgebungslauschen oder eine Standortverfolgung im TETRA-Netzwerk verwendet wird;
wenn die Luftschnittstelle für ein Umgebungslauschen oder eine Standortverfolgung im TETRA-Netzwerk verwendet wird, Zulassen des Umgebungslauschens oder der Standortverfolgung, um fortzufahren;
andernfalls Deaktivieren der Luftschnittstelle.

6. Verfahren nach einem der vorhergehenden Ansprüche, wobei das Verfahren Folgendes umfasst:
Prüfen (402) durch die Benutzervorrichtung in Reaktion auf das Empfangen (403, 8-1) einer dritten Fernverwaltungsnachricht zum permanenten Deaktivieren der Funktionalität der Benutzervorrichtung in einem sicheren Mobilfunknetzwerk, zu dem die sichere Netzwerkverbindung aufgebaut ist, in der Benutzervorrichtung durch das erste Modul über eine sichere Netzwerkverbindung via einen ersten Typ einer Luftschnittstelle, ob die Benutzervorrichtung das sichere Mobilfunknetzwerk erfolgreich authentifiziert hat; und
wenn nicht, Ignorieren der dritten Fernverwaltungsnachricht;
andernfalls Durchführen mindestens von Folgendem:
Deaktivieren (404, 8-6) von allen Luftschnittstellen, die vom ersten Modul in der Benutzervorrichtung verwendbar sind, durch das erste Modul in Reaktion auf die dritte Nachricht;
Senden (8-7) eines dritten Befehls zum Eintreten in einen toten Betriebsmodus durch das erste Modul in Reaktion auf die dritte Nachricht an das zweite Modul;
Deaktivieren (404, 8-9) von allen Luftschnittstellen in der Benutzervorrichtung, die vom zweiten Modul verwendbar sind, durch das zweite Modul in Reaktion auf den dritte Befehl;
Ausschalten (404, 8-6, 8-9) von Benutzerschnittstellen in der Benutzervorrichtung durch die Benutzervorrichtung in Reaktion auf die dritte Nachricht und
Löschen (411, 8-6, 8-9) von Schlüsselinformationen, die für eine Kommunikation benötigt werden, durch die Benutzervorrichtung.

7. Verfahren nach einem von vorhergehenden Ansprüchen, das ferner Folgendes umfasst:
Senden (9-3) eines Befehls, der das erste Modul veranlasst, seine Einstellungen auf Werkseinstellungen einzustellen (9-4), in Reaktion auf das Empfangen (9-1) eines Befehls zum Einstellen des zweiten Moduls auf Werkseinstellungen und Löschen von entsprechenden Benutzerdaten und einem Zwischenspeicher vom zweiten Modul in der Benutzervorrichtung durch das zweite Modul.

8. Benutzervorrichtung (110), die ein erstes Modul (111) zum Implementieren einer sicheren Mobilfunknetzwerkbenutzervorrichtungsfunktionalität für ein sicheres Mobilfunknetzwerk, ein zweites Modul (112) zum Implementieren einer Funktionalität für einen anderen Typ eines Mobilfunknetzwerks, drei oder mehr Luftschnittstellen, die eine gesicherte zellulare Luftschnittstelle des sicheren Mobilfunknetzwerks, die vom ersten Modul verwendbar sind, eine zellulare Luftschnittstelle des Mobilfunknetzwerks, die vom zweiten Modul verwendbar ist, und eine oder mehrere weitere Luftschnittstellen umfassen, die einen drahtlosen Kurzbereichszugang bereitstellen und vom ersten Modul und vom zweiten Modul verwendbar sind, sowie Mittel (110-1, 111-1, 112-1) zum Implementieren eines Verfahrens nach einem der vorhergehenden Ansprüche umfasst.

9. Computerprogrammprodukt, das einen Computerprogrammcode umfasst, der dazu ausgelegt ist, ein Verfahren nach einem der Ansprüche 1 bis 7 durchzuführen, wenn es auf einer Benutzervorrichtung ausgeführt wird, die ein erstes Modul zum Implementieren einer sicheren Mobilfunknetzwerkbenutzervorrichtungsfunktionalität für ein sicheres Mobilfunknetzwerk und ein zweites Modul zum Implementieren einer Funktionalität für einen anderen Typ eines Mobilfunknetzwerks sowie drei oder mehr Luftschnittstellen umfasst, die eine gesicherte zellulare Luftschnittstelle des sicheren Mobilfunknetzwerks umfassen, die vom ersten Modul verwendbar ist, eine zellulare Luftschnittstelle des Mobilfunknetzwerks, die vom zweiten Modul verwendbar ist, und eine oder mehrere weitere Luftschnittstellen, die einen drahtlosen Kurzbereichszugang bereitstellen und vom ersten Modul und vom zweiten Modul verwendbar sind.

## Revendications

1. Procédé pour un dispositif utilisateur comprenant un premier module pour la mise en œuvre d'une fonctionnalité de dispositif utilisateur de réseau cellulaire sécurisé pour un réseau cellulaire sécurisé, un second module pour la mise en œuvre d'une fonctionnalité pour un autre type d'un réseau cellulaire et trois interfaces hertziennes ou plus comprenant une interface hertzienne cellulaire sécurisée du réseau cellulaire sécurisé, utilisable par le premier module, et une interface hertzienne cellulaire du réseau cellulaire, utilisable par le second module, et une ou plusieurs interfaces hertziennes supplémentaires fournissant un accès sans fil à courte portée et qui sont utilisables par le premier module et le second module, le procédé comprenant :
l'envoi (6-7), par le premier module, en réponse à la réception (202, 303, 6-1), dans le dispositif utilisateur par le premier module, sur une connexion de réseau sécurisé via l'interface hertzienne cellulaire sécurisée, d'un message de gestion à distance pour temporairement désactiver la fonctionnalité du dispositif utilisateur dans un réseau cellulaire sécurisé là où la connexion de réseau sécurisé est établie, au second module, d'une consigne d'entrer dans un mode de fonctionnement désactivé ;
la désactivation (203, 305, 307, 6-9), par le second module, en réponse à la consigne, dans le dispositif utilisateur, d'une ou de plusieurs interfaces hertziennes, qui sont utilisables par le second module, lesdites interfaces hertziennes incluant l'interface hertzienne cellulaire du réseau cellulaire ;
la mise hors tension (203, 305, 307, 6-6), par le dispositif utilisateur, en réponse au message, d'interfaces utilisateur dans le dispositif utilisateur ; et
la permission (204, 306) d'un échange d'informations de commande via l'interface hertzienne cellulaire sécurisée avec le réseau cellulaire sécurisé sur la connexion de réseau sécurisé.

2. Procédé selon la revendication 1, comprenant en outre :
l'activation (206, 309, 7-6), par le premier module, en réponse à la réception (205, 308, 7-1), dans le dispositif utilisateur par le premier module, sur la connexion de réseau sécurisé, d'un deuxième message de gestion à distance pour activer la fonctionnalité du dispositif utilisateur dans le réseau cellulaire sécurisé, d'interfaces hertziennes utilisables par le premier module dans le dispositif utilisateur ;
l'envoi (7-7), par le premier module, en réponse au deuxième message de gestion à distance, au second module, d'une deuxième consigne d'entrer dans un mode de fonctionnement normal ;
l'activation (206, 309, 7-9), par le second module, en réponse à la deuxième consigne, d'interfaces hertziennes utilisables par le second module ; et
la mise sous tension (206, 309, 7-6, 7-9), par le dispositif utilisateur, en réponse au deuxième message de gestion à distance, d'interfaces utilisateur dans le dispositif utilisateur.

3. Procédé selon la revendication 1 ou 2, comprenant en outre :
la vérification (302), par le dispositif utilisateur, de si le dispositif utilisateur a authentifié avec succès le réseau cellulaire sécurisé ; et
si tel n'est pas le cas, le fait d'ignorer le message de gestion à distance.

4. Procédé selon l'une quelconque des revendications précédentes, dans lequel le premier module (111) est un module TETRA, le second module (112) est un module de téléphone intelligent, le réseau cellulaire sécurisé (101) est un réseau TETRA, l'interface hertzienne cellulaire est une interface de réseau cellulaire public, et les une ou plusieurs interfaces hertziennes supplémentaires incluent au moins l'une parmi une interface de réseau local sans fil et une interface Bluetooth.

5. Procédé selon la revendication 4, comprenant en outre :
la vérification, avant de désactiver temporairement une interface hertzienne, qui est utilisable par le second module, de si l'interface hertzienne est utilisée pour une écoute ambiante ou un suivi d'emplacement dans le réseau TETRA ;
si l'interface hertzienne est utilisée pour une écoute ambiante ou un suivi d'emplacement dans le réseau TETRA, la permission de la poursuite de l'écoute ambiante ou du suivi d'emplacement ;
dans le cas contraire, la désactivation de l'interface hertzienne.

6. Procédé selon une quelconque revendication précédente, le procédé comprenant :
la vérification (402), par le dispositif utilisateur, en réponse à la réception (403, 8-1), dans le dispositif utilisateur par le premier module, sur une connexion de réseau sécurisé via un premier type d'interface hertzienne, d'un troisième message de gestion à distance pour désactiver de façon permanente la fonctionnalité du dispositif utilisateur dans un réseau cellulaire sécurisé là où la connexion de réseau sécurisé est établie, de si le dispositif utilisateur a authentifié avec succès le réseau cellulaire sécurisé ; et
si tel n'est pas le cas, le fait d'ignorer le troisième message de gestion à distance ;
dans le cas contraire, la réalisation d'au moins ce qui suit :
la désactivation (404, 8-6), par le premier module, en réponse au troisième message, de toutes les interfaces hertziennes utilisables par le premier module dans le dispositif utilisateur ;
l'envoi (8-7), par le premier module, en réponse au troisième message, au second module, d'une troisième consigne d'entrer dans un mode de fonctionnement mort ;
la désactivation (404, 8-9), par le second module, en réponse à la troisième consigne, dans le dispositif utilisateur, de toutes les interfaces hertziennes utilisables par le second module ;
la mise hors tension (404, 8-6, 8-9), par le dispositif utilisateur, en réponse au troisième message, d'interfaces utilisateur dans le dispositif utilisateur ; et
l'effacement (411, 8-6, 8-9), par le dispositif utilisateur, d'informations clés nécessaires pour une communication.

7. Procédé selon l'une quelconque des revendications précédentes, comprenant en outre :
l'envoi (9-3), en réponse à la réception (9-1), dans le dispositif utilisateur par le second module, d'une consigne de paramétrer le second module sur des paramètres d'usine et d'effacer des données d'utilisateur et une antémémoire correspondantes, du second module au premier module, d'une consigne amenant le premier module à paramétrer (9-4) ses paramètres sur des paramètres d'usine.

8. Dispositif utilisateur (110) comprenant un premier module (111) pour la mise en œuvre d'une fonctionnalité de dispositif utilisateur de réseau cellulaire sécurisé pour un réseau cellulaire sécurisé, un second module (112) pour la mise en œuvre d'une fonctionnalité pour un autre type de réseau cellulaire, trois interfaces hertziennes ou plus comprenant une interface hertzienne cellulaire sécurisée du réseau cellulaire sécurisé, utilisable par le premier module, une interface hertzienne cellulaire du réseau cellulaire, utilisable par le second module et une ou plusieurs interfaces hertziennes supplémentaires fournissant un accès sans fil à courte portée et qui sont utilisables par le premier module et le second module et un moyen (110-1, 111-1, 112-1) de mise en œuvre d'un procédé selon l'une quelconque des revendications précédentes.

9. Produit programme d'ordinateur comprenant un code de programme d'ordinateur configuré pour réaliser un procédé selon l'une quelconque des revendications 1 à 7 lors de son exécution sur un dispositif utilisateur comprenant un premier module pour la mise en œuvre d'une fonctionnalité de dispositif utilisateur de réseau cellulaire sécurisé pour un réseau cellulaire sécurisé, et un second module pour la mise en œuvre d'une fonctionnalité pour un autre type de réseau cellulaire et trois interfaces hertziennes ou plus comprenant une interface hertzienne cellulaire sécurisée du réseau cellulaire sécurisé, utilisable par le premier module, une interface hertzienne cellulaire du réseau cellulaire, utilisable par le second module et une ou plusieurs interfaces hertziennes supplémentaires fournissant un accès sans fil à courte portée et qui sont utilisables par le premier module et le second module.
